# EUROPÄISCHE PATENTSCHRIFT

(11) **EP 1 389 358 B1**
(45) Veröffentlichungstag und Bekanntmachung des Hinweises auf die Patenterteilung: **15.02.2006**
(21) Anmeldenummer: 02729903.1
(22) Anmeldetag: 22.05.2002
(51) Int. Cl.: H02K 35/02

(54) **INDUKTIVER SPANNUNGSGENERATOR**
INDUCTIVE VOLTAGE GENERATOR
GENERATEUR DE TENSION INDUCTIF

(30) Priorität: 22.05.2001 DE 10125059
(43) Veröffentlichungstag der Anmeldung: 18.02.2004
(73) Patentinhaber: EnOcean GmbH, 82041 Oberhaching (DE)
(72) Erfinder: ALBSMEIER, Andre, 81479 München (DE); BULST, Wolf-Eckhart, 81739 München (DE); GUNTERSDORFER, Max, 85567 Grafing (DE); PISTOR, Klaus, 83623 Linden (DE); SCHMIDT, Frank, 85604 Poering (DE); SCZESNY, Oliver, 85609 Aschheim (DE); SEISENBERGER, Claus, 84181 Neufrannhofen (DE); VOSSIEK, Martin, 31139 Hildesheim (DE)
(74) Vertreter: Epping - Hermann - Fischer
(86) Internationale Anmeldenummer: PCT/DE2002/001847
(87) Internationale Veröffentlichungsnummer: WO 2002/095908

(56) Entgegenhaltungen:
- WO-A-84/01983
- WO-A-99/49556
- DE-A- 19 627 998
- DE-A- 19 929 341
- DE-C- 19 953 489
- US-A- 3 693 033
- US-A- 3 984 707
- US-B1- 6 192 683

## Beschreibung

Die Erfindung betrifft einen induktiven Spannungsgenerator zur Umwandlung von nicht-elektrischer Primärenergie in ein Spannungssignal mittels Induktion, insbesondere geeignet für batterielose Sensoren und Meldesysteme, einen Schalter, ein Sensorsystem sowie ein Verfahren zur Spannungserzeugung nach dem Induktionsprinzip.

Aus WO 98/36395 ist eine Anordnung zur Erzeugung kodierter Hochfrequenzsignale bekannt, bei der ein Wandler zur Umwandlung nicht-elektrischer Primärenergie in niederfrequente elektrische Energie vorhanden ist, unter anderem durch elektrodynamische Wandlung von Schwingungs-/Beschleunigungsänderungs-Energie. Zur Erzeugung einer Piezospannung wird eine Über-Totpunkt-Feder beschrieben, die bei einer Belastung über den Totpunkt hinaus schlagartig auf den Wandler einwirkt.

Druckschrift US 3,693,033 A zeigt einen Schalter als Impulsgenerator, wobei ein Permanentmagnet beweglich zu einer Spule angeordnet ist, und in einer Ausgangs- oder Ruheposition von der Spule entfernt angeordnet ist. Eine mit einem Permanentmagneten verbundene Federmechanik bewirkt, bei Druckausübung auf die Feder und bei Erreichen einer bestimmten Kraft, dass Haltekräfte des Permanentmagneten, die den Spulenkern in seiner Ausgangsposition halten, überwunden werden und damit der Permanentmagnet sich der Spule nähert. Damit wird eine schnelle, aber kontinuierliche Flussänderung des magnetischen Flusses erzeugt, wobei sich die dadurch erzeugte Spannung ebenso als schnell ansteigendes, aber kontinuierlich ansteigendes Spannungssignal zeigt.

Aus Druckschrift DE 199 29 341 A1 ist ein Induktionssystem bekannt, bei dem ein Masse-Feder-System, angeregt durch äußere Einflüsse, ein Element des Induktionssystems in schwingende Bewegung versetzt. Dadurch wird eine elektrische Spannung an einer Spule induziert.

Die Druckschrift WO 99/49556 A1 zeigt einen elektromagnetischen Wandler, bei dem ein Masse-Feder-System zu schwingenden Bewegungen angeregt wird. Dabei schwingt ein ferromagnetisches Teil wie ein Pendel über eine aus zwei entgegengesetzt gerichteten Permanentmagneten gebildete Vorrichtung, die über ferromagnetische Materialien einem magnetischen Kreis bildet.

Bisher ist zur induktiven Wandlung mechanischer Primärenergie im Wesentlichen ein Spannungsgenerator mit einem piezoelektrischen Element oder einem Kleindynamo bekannt. Die Dynamolösung besteht aus einer Anordnung mit einer Induktionsspule mit Eisenkern und einem Dauermagneten, der vor dem Eisenkern oszilliert; diese Anordnung ist vergleichsweise komplex und großvolumig.

Es ist die Aufgabe der vorliegenden Erfindung, eine kompakte Möglichkeit zur induktiven Spannungserzeugung mit hohem Wirkungsgrad bereitzustellen, welche insbesondere für batterielose Sensoren und Meldesysteme geeignet ist.

Diese Aufgabe wird mittels eines Spannungsgenerators nach Anspruch 1, eines Schalters nach Anspruch 3, eines Sensorsystems nach Anspruch 4 und eines Verfahrens nach Anspruch 5 gelöst. Vorteilhafte Ausgestaltungen sind den Unteransprüchen entnehmbar.

Dazu weist der Spannungsgenerator mindestens einen mechanischen Energiespeicher zur Aufnahme der nicht-elektrischen Primärenergie und mindestens ein damit koppelbares Induktionssystem auf.

Die Primärenergie kann beispielsweise eine mechanische Prozessenergie (z. B. (Finger)druck, Zug oder Vibration) und/oder eine Umgebungsenergie (z. B. eine Temperaturdifferenz) oder eine Kombination daraus sein. Die mechanische Prozessenergie kann beispielsweise durch eine manuelle Betätigung, z. B. eines Schalters, bereitgestellt werden. Die thermische Umgebungsenergie kann beispielsweise über ein Element mit temperaturabhängigem Dehnungsverhalten, z. B. einen Bimetallschalter oder einem sogenannten "Memory-Element", in den mechanischen Energiespeicher eingebracht werden.

Der mechanische Energiespeicher ist jedes System, das eine Energie durch Änderung mechanischer Kenngrößen (z. B. Druck, Zug, potentielle Energie, Verformung etc.) im wesentlichen reversibel speichern kann. So können eine Feder (Zugfeder, Biegeelement etc.) eine Dehnungsenergie oder ein Gewicht eine potentielle Energie speichern und, z. B. über einen Hub eines Stößels, wieder abgeben. Als mechanischer Energiespeicher wird beispielsweise auch eine pneumatische Feder angesehen, die eine Druckenergie über einen Stößel abgeben kann.

Das Induktionssystem ist so gestaltet, dass es zur Abgabe einer Induktionsspannung geeignet ist und umfasst typischerweise mindestens eine Induktionsspule, gegebenenfalls mit einem magnetischen, im allgemeinen eisenhaltigen, Kern.

Das Induktionssystem ist mit dem mechanischen Energiespeicher so gekoppelt, dass es durch eine Bewegung des mechanischen Energiespeichers im Induktionssystem die Induktionsspannung induzierbar ist; die abgegebene mechanische Energie wird also mittels Induktion vom Induktionssystem in ein Spannungssignal überführt. Beispielsweise enthält der mechanische Energiespeicher dazu einen Magneten, vorzugsweise einen Permanentmagneten, der nach Erreichen eines Umschlagspunktes durch die freigesetzte mechanische Energie so bewegt wird, dass er im Bereich des Induktionssystems eine zeitliche Änderung des magnetischen Flusses Φ bewirkt. Der mechanische Energiespeicher kann also auch als Transformator nicht-mechanischer Primärenergie in mechanische Bewegungsenergie dienen.

Der Spannungsgenerator weist mindestens einen Umschlagpunkt auf, bei dessen Erreichen mindestens ein Teil der mechanisch gespeicherten Energie in eine Bewegung zur induktiven Erzeugung des Spannungssignals umgesetzt wird. Der Umschlagpunkt entspricht somit analog einem Schwellwert der gespeicherten mechanischen Energie. Vor Erreichen des Umschlagpunktes wird die dem mechanischen Energiespeicher zugeführte Primärenergie in diesem im wesentlichen nur gespeichert.

Der Umschlagpunkt kann anhängig von der Umgebung und vom Induktionssystem sein. Es ist vorteilhaft, wenn mehr als ein Umschlagpunkt vorhanden ist und/oder wenn der jeweilige Umschlagpunkt von zwei Seiten erreichbar ist, weil so eine Spannungserzeugung flexibel einstellbar ist. Es ist weiterhin vorteilhaft, wenn die Bewegung möglichst schlagartig erfolgt. Beispielsweise kann der Umschlagpunkt bei Verwendung einer Feder als Energiespeicher sowohl bei Druckbelastung als auch bei Zugbelastung erreicht werden, wobei die Höhe des Umschlagpunktes in beide Betätigungsrichtungen unterschiedlich sein kann.

Durch die Verwendung des mechanischen Energiespeichers mit Umschlagpunkt ergibt sich der Vorteil, dass der Verlauf der Magnetfeldänderung und damit der Induktionsspannung nicht von der zeitlichen Einwirkung der Primärenergie abhängt. Zudem ist die Höhe der umgeformten Energie im Wesentlichen konstant.

Es wird bevorzugt, wenn die Primärenergie mittels eines Bedienelementes, z. B. eines Schalters, dem mechanischen Energiespeicher zugeführt wird. Das Bedienelement kann auch Teil des mechanischen Energiespeichers sein.

In den folgenden Ausführungsbeispielen wird der Spannungsgenerator schematisch näher ausgeführt.
- Figur 1: zeigt das Prinzip der Spannungserzeugung,
- Figur 2: zeigt ein Sensorsystem, das zur Energieversorgung den induktiven Spannungsgenerator enthält,
- Figur 3: zeigt verschiedene Positionen bei einer Betätigung des Spannungsgenerators

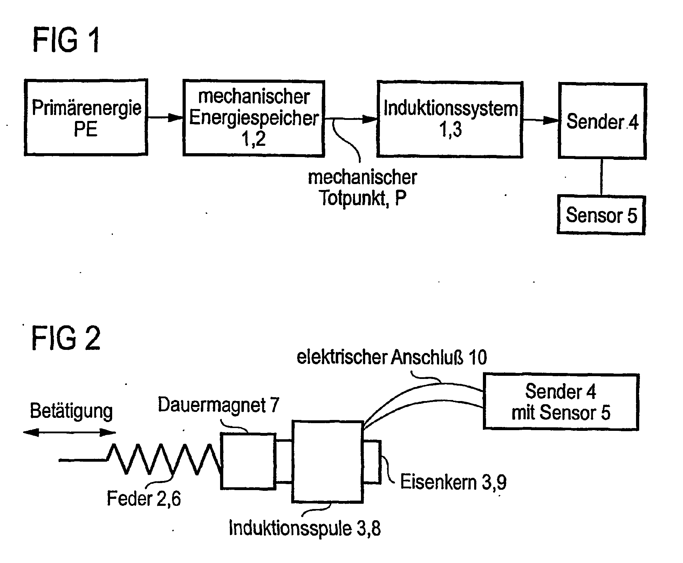

Figur 1 zeigt ein Prinzipschaltbild zur Spannungserzeugung.

Nicht-elektrische Primärenergie PE, die aus der Umgebung (z. B. einer Temperaturdifferenz AT) oder einem Prozess (z. B. einem Fingerdruck) verfügbar ist, wird in den mechanischen Energiespeicher 2 als Teil des Spannungsgenerators 1 eingespeist. Dessen mechanische Energie wird nach Erreichen des Umschlagpunkts P über eine Bewegung in das Induktionssystem 3, das ebenfalls ein Teil des Spannungsgenerators 1 ist, eingekoppelt und dort zur Generierung eines Spannungssignals USIG verwendet. Das Spannungssignal USIG steht dann einem Verbraucher, hier: einem Sender 4 mit daran angeschlossenem Sensor 5, zur Verfügung. Insbesondere ist der Spannungsgenerator für batterielose Verbraucher geeignet, z. B. Knacksensoren und Funkfernschalter. Der Sender 4 kann z. B. ein Funkfernschalter sein und Sendetelegramme per Funk, IR etc. aussenden.

Figur 2 zeigt in Seitenansicht eine bevorzugte Ausführungsform eines Spannungsgenerators 1.

In dieser Figur wird eine (evtl. auch vorgespannte) Feder 6 als mechanischer Energiespeicher 2 eingesetzt wird.

Die Feder 6 ist mit ihrem rechten Ende an einem Dauermagneten 7 befestigt. Der Dauermagnet 7 liegt in dieser Stellung auf einem von einer Induktionsspule 8 umschlossenen Eisenkern 9 auf; Induktionsspule 8 und Eisenkern 9 sind Teil des Induktionssystems 3. Statt der mechanischen Zugfeder 6 sind als mechanischer Energiespeicher 2 beispielsweise auch eine rotierende Feder, ein Gewicht oder eine pneumatische Feder einsetzbar.

Mit der Induktionsspule 8 ist über einen elektrischen Anschluss 10 ein Verbraucher in Form eines Senders 4 verbunden, welcher einen Sensor 5 und eine Hochfrequenz-Sendestufe umfasst.

Das linke Ende der Feder 6 ist mit einer Betätigungseinheit zur Betätigung der Feder 6 verbunden (hier nicht dargestellt), z. B. einem Ende eines Kippschalters.

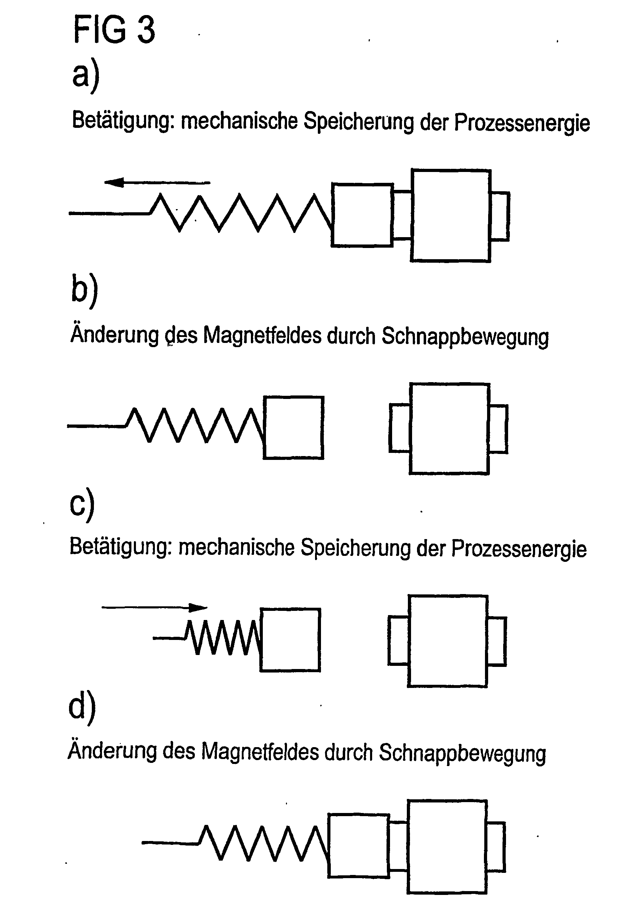

Figur 3 zeigt in den Teilbildern a) bis d) einen Betätigungs-und Rückstellvorgang der Vorrichtung aus Figur 2.

In Figur 3a wird die Feder 6 an ihrem linken Ende in Pfeilrichtung gespannt. Mit sich vergrößernder Zugspannung wird in der Feder 6 zunehmend mechanische Energie gespeichert. In dieser Figur ist die Spannung der Feder 6 noch nicht hoch genug, um die magnetische Haftung des Dauermagneten 7 vom Eisenkern 9 zu lösen.

In Figur 3b ist die Zugspannung der Feder 6 so hoch geworden, dass sich der Dauermagnet 7 vom Eisenkern 9 gelöst hat. Durch die Bewegung des Dauermagneten 7 wird der magnetische Fluss Φ zeitlich geändert, wodurch in der Induktionsspule 8 eine Spannung USIG induziert wird; es erfolgt also eine Umwandlung der mechanisch gespeicherten Energie in elektrische Energie.

Der Umschlagpunkt ("mechanischer Totpunkt"), an dem die Trennung erfolgt, ist nur abhängig von der Spannung der Feder 6. Der Umschlagpunkt ist vorteilhafterweise z. B. auch durch die Stärke des Magnetfeldes selbst definiert.

In Figur 3c wird nun die Feder 6 in umgekehrter Richtung betätigt. Die Geschwindigkeit der Annäherung des Dauermagneten 7 an den Eisenkern 9 wird durch den Betätigungsvorgang und die Anziehungskraft zwischen Dauermagneten 7 und Eisenkern 9 bestimmt. Mit zunehmender Anziehungskraft erhöht sich auch die Geschwindigkeit des Dauermagneten 6. Durch dessen entgegengesetzt gerichtete Bewegung wird ebenfalls ein Spannungssignal USIG' in der Induktionsspule induziert. Im Verbraucher kann vorteilhafterweise die Bewegungsrichtung des mechanischen Energiespeichers 2 festgestellt werden, z. B. durch Detektion der Polung der Spannungssignale USIG, USIG'. Dadurch kann z. B. ein Anschalten eines Schalters von seinem Ausschalten unterschieden werden.

Figur 3d zeigt die Anordnung in Ruhestellung nach Rückkehr in die Ausgangsposition.

Im vorliegenden Anwendungsbeispiel weist der Dauermagnet 7 somit zwei definierte Endstellungen auf, in denen er in einem stabilen Zustand gehalten wird. Bei Einwirken der Primärenergie speichert die Feder 6 solange mechanische Energie, bis die bei Erreichen mindestens eines Umschlagpunktes der Dauermagnet 7 in seine andere stabile Endstellung schnappt, wobei die mechanische Energie von der Feder 6 zumindest teilweise in das Spannungssignal USIG, USIG' umgewandelt wird.

Dieser Spannungsgenerator lässt sich sehr kompakt aufbauen, arbeitet mit einem relativ hohen Wirkungsgrad, ist einfach in der Herstellung und weist außerdem den Vorteil eines mechanisch definierten Schaltpunktes auf. Statt einer aufwendigen oszillierenden Magnetbewegung ist nur eine einfache Schnappbewegung erforderlich.

Die Erfindung betrifft auch Schalter und Sensorsysteme, die den Spannungsgenerator aufweisen, z. B. Knacksensoren, Lichtschalter etc., insbesondere batterielose Schalter und Sensorensysteme, die Nachrichten per Funk aussenden und empfangen können. Als Anwendungsbeispiele für den Spannungsgenerator wird auf WO 98/36395 verwiesen, insbesondere zur Verwendung von Schaltern und Sensoren in einem "Powerline Communication" ("PLC")-System, siehe beispielsweise Süddeutsche Zeitung Nr.74 vom 29. März 2001, S. 27. Selbstverständlich ist der Spannungsgenerator nicht auf diese Anwendungsbeispiele eingeschränkt.

## Patentansprüche

1. Spannungsgenerator (1) zur Umwandlung von nicht-elektrischer Primärenergie (PE) in ein Spannungssignal (USIG, USIG') mittels Induktion mit
- einem mechanischen Energiespeicher (2) zur Aufnahme der Primärenergie (PE), der mindestens einen Umschlagpunkt (P) aufweist, und eine Feder (6) beinhaltet,
- mindestens einem Induktionssystem (3) mit einer Induktionsspule (8) die einen ferromagnetischen Kern (9) umfaßt,
- mindestens einem Magnet, insbesondere einem Dauermagnet (7)
**dadurch gekennzeichnet, dass**
der ferromagnetische Kern einen mechanischen Anschlag aufweist und der Dauermagnet (7) über den mechanischen Energiespeicher (2) in einer Dimension hin und her bewegbar ist und ein festgelegter Bewegungsendpunkt oder Bewegungsstartpunkt am Anschlag des ferromagnetischen Kerns (9) der Induktionsspule (8) liegt.

2. Spannungsgenerator nach Patentanspruch 1,
**dadurch gekennzeichnet, dass**
die Feder (6) an dem Magnet insbesondere dem Dauermagnet befestigt ist.

3. Schalter, insbesondere zur mechanischen Betätigung aufweisend einen Spannungsgerator nach Patentanspruch 1 bis 2.

4. Sensorsystem, aufweisend einen Spannungsgenerator nach Patentanspruch 1 bis 2, sowie mindestens eine Sensor (5).

5. Verfahren zur induktiven Spannungserzeugung bei dem
- Primärenergie in einen mechanischen Energiespeicher (2) solange gespeichert wird, bis mindestens ein Umschlagpunkt (P) erreicht ist,
- sich der mechanische Energiespeicher (2) bei Erreichen des Umschlagpunktes (P) so bewegt, daß in einem mit dem mechanischen Energiespeicher (2) gekoppelten Induktionssystem (3) mit
- einem Dauermagnet (7) und
- einer Induktionsspule (8) mit einem ferromagnetischen Kern (9)
ein Spannungssignal (USIG, USIG') erzeugt wird,
**dadurch gekennzeichnet, dass**
der ferromagnetische Kern (9) einen mechanischen Anschlag aufweist und der Dauermagnet (7) über den mechanischen Energiespeicher (2) in einer Dimension hin und her bewegbar ist und ein festgelegter Bewegungsendpunkt oder Bewegungsstartpunkt am Anschlag des ferromagnetischen Kerns (9) der Induktionsspule (8) liegt.

6. Verfahren nach Patentanspruch 5, bei dem die Primärenergie (PE) durch Dehnung oder Verformung des mechanischen Energiespeichers (2) in diesem gespeichert wird.

## Claims

1. Voltage generator (1) for conversion of non-electrical primary energy (PE) to a voltage signal (USIG, USIG') by means of induction, having
- a mechanical energy store (2) for holding the primary energy (PE), which has at least one changeover point (P) and contains a spring (6),
- at least one induction system (3) having an induction coil (8) which has a ferromagnetic core (9),
- at least one magnet, in particular a permanent magnet (7),
**characterized in that**
the ferromagnetic core has a mechanical stop and the permanent magnet (7) can be moved backwards and forwards in one dimension over the mechanical energy store (2), and a defined movement end point or movement start point is located at the stop of the ferromagnetic core (9) of the induction coil (8).

2. Voltage generator according to Patent Claim 1,
**characterized in that**
the spring (6) is attached to the magnet, in particular to the permanent magnet.

3. Switch, in particular for mechanical operation, having a voltage generator according to Patent Claim 1 to 2.

4. Sensor system having a voltage generator according to Patent Claim 1 to 2, as well as at least one sensor (5).

5. Method for inductive voltage production in which:
- primary energy is stored in a mechanical energy store (2) until at least one changeover point (P) is reached,
- the mechanical energy store (2) is moved on reaching the changeover point (P) such that a voltage signal (USIG, USIG') is produced in an induction system (3) which coupled to the mechanical energy store (2) and has
- a permanent magnet (7) and
- an induction coil (8) with a ferromagnetic coil (9) ,
**characterized in that**
the ferromagnetic core (9) has a mechanical stop and the permanent magnet (7) can be moved backwards and forwards in one dimension over the mechanical energy store (2), and a defined movement end point or movement start point is located at the stop of the ferromagnetic core (9) of the induction coil (8).

6. Method according to Patent Claim 5, in which the primary energy (PE) is stored in the mechanical energy store (2) by strain or deformation of the mechanical energy store (2).

## Revendications

1. Générateur (1) de tension pour la transformation d'énergie (PE) primaire non électrique en un signal (USIG, USIG') de tension au moyen d'une induction, comprenant
- un accumulateur (2) d'énergie mécanique pour l'absorption de l'énergie (PE) primaire, qui a au moins un point (P) de transition et qui comporte un ressort (6),
- au moins un système (3) d'induction ayant une bobine (8) d'induction qui entoure un noyau (9) ferromagnétique,
- au moins un aimant, notamment un aimant (7) permanent,
**caractérisé en ce que**
le noyau ferromagnétique a une butée mécanique et l'aimant (7) permanent peut être déplacé en va-et-vient dans une dimension par l'intermédiaire de l'accumulateur (2) d'énergie mécanique et un point final de déplacement fixé ou un point de début de déplacement se trouve sur la butée du noyau (9) ferromagnétique de la bobine (8) d'induction.

2. Générateur de tension suivant la revendication 1, **caractérisé en ce que** le ressort (6) est fixé sur l'aimant, notamment sur l'aimant permanent.

3. Interrupteur, notamment pour l'actionnement mécanique, comprenant un générateur de tension suivant la revendication 1 à 2.

4. Système de capteur comprenant un générateur de tension suivant la revendication 1 à 2, ainsi qu'au moins un capteur (5).

5. Procédé de production de tension par induction, dans lequel
- on accumule de l'énergie primaire dans un accumulateur (2) d'énergie mécanique jusqu'à ce que soit atteint au moins un point (P) de transition,
- l'accumulateur (2) d'énergie mécanique se déplace lorsque le point (P) de transition est atteint de manière à produire un signal (USIG, USIG') de tension dans un système (3) d'induction couplé à l'accumulateur (2) d'énergie mécanique et comprenant
- un aimant (7) permanent, et
- une bobine (8) d'induction ayant un noyau (9) ferromagnétique,
**caractérisé en ce que**
lé noyau ferromagnétique a une butée mécanique et l'aimant (7) permanent peut être déplacé en va-et-vient dans une dimension par l'intermédiaire de l'accumulateur (2) d'énergie mécanique et un point final de déplacement fixé ou un point de début de déplacement se trouve sur la butée du noyau (9) ferromagnétique de la bobine (8) d'induction.

6. Procédé suivant la revendication 5, dans lequel on emmagasine l'énergie (PE) primaire dans l'accumulateur (2) d'énergie mécanique en l'allongeant ou en le déformant.
